# EUROPÄISCHE PATENTSCHRIFT

(11) **EP 0 668 188 B1**
(45) Veröffentlichungstag und Bekanntmachung des Hinweises auf die Patenterteilung: **17.06.1998**
(21) Anmeldenummer: 94119717.0
(22) Anmeldetag: 14.12.1994
(51) Int. Cl.: B60R 7/04

(54) **Deckelverriegelung für die Abdeckung von Behältnissen in Kraftfahrzeugen**
Lid locking arrangement for the covering of compartments in cars
Verrouillage de couvercle pour fermer des boîtes dans des automobiles

(30) Priorität: 25.01.1994 DE 9401228 U
(43) Veröffentlichungstag der Anmeldung: 23.08.1995
(73) Patentinhaber: ELDRA-KUNSTSTOFFTECHNIK GmbH, D-84144 Geisenhausen (DE)
(72) Erfinder: Geisperger, Peter, D-84416 Taufkirchen /Vils (DE)
(74) Vertreter: Kohlmann, Karl Friedrich, Dipl.-Ing.

(56) Entgegenhaltungen:
- DE-A- 3 933 946
- US-A- 4 809 897
- US-A- 5 205 452

## Beschreibung

Die Erfindung bezieht sich auf eine Deckelverriegelung für die Abdeckung von Behältnissen in Kraftfahrzeugen für zweischalige schwenkbare Deckel.

Als durch einen schwenkbaren Deckel verschließbare Behältnisse in einem Kraftfahrzeug kommen in bevorzugterweise Handschuhkästen, Mittelkonsolen oder abdeckbare Vertiefungen in Armlehnen oder dergl. in Betracht. Sofern solchen Behältnissen zugeordnete Deckel einschalig ausgebildet und mit einer Verriegelungseinrichtung versehen sind, besteht die Verriegelungseinrichtung üblicherweise aus einem einfachen Schnappverschluß oder einem gesondert zu betätigenden Riegelelement. Bekanntermaßen werden hierfür als Kipp-, Schwenk-oder Schieberiegel ausgebildete Verriegelungseinrichtungen verwendet, die jeweils einer mehrteiligen Ausbildung, insbesondere eines Riegelgliedes und seiner Lagerung und damit einer mehr oder minder aufwendigen Herstellung und Montage bedürfen. Für die Verriegelung eines einschaligen Deckels sind diese bekannten Verriegelungseinrichtungen hinreichend gut geeignet, zumal eine Fehlbedienung bei einschaligen Deckeln ohnehin nicht in betracht kommt.
Bei zwecks Schaffung eines getrennten Aufbewahrungsraumes, z.B. für Telefone, zweischalig ausgebildeten Deckeln für Behältnisse in einem Kraftfahrzeug ist eine wechselweise Verriegelung einerseits der beiden Deckelschalen des Deckels miteinander und andererseits des Deckels insgesamt gegenüber der Behältniswandung erforderlich, wobei die beiden Verriegelungen in einer solchen Weise voneinander unabhängig betätigbar sein müssen, daß jeweils die eine Verrieglung eingerastet bleibt, sobald die andere Verriegelung gelöst wird. In diesem Zusammenhang ist es wesentlich, daß das wahlweise Lösen der Verriegelungen in vielen Fällen durch den Fahrzeugführer erfolgt, der seine Aufmerksamkeit dem Straßenverlauf und dem Verkehr zuwenden muß und daher, zumindest in der Regel keinen Sichtkontakt zu den Verriegelungseinrichtungen bzw. deren Betätigungsorganen herstellen kann. Eine unverzichtbare Anforderung an solche Verriegelungseinrichtungen besteht daher darin, daß sie "blind" aber trotzdem sicher betätigbar, d.h. lösbar sein müssen.
Abgesehen davon, daß die bekannten und gebräuchlichen Verriegelungseinrichtungen der vorgenannten Bauarten für eine "blinde" Bedienung denkbar ungeeignet sind, sind sie außerdem für die Ausbildung einer wechselweisen Verriegelung einerseits zweier Deckelschalen miteinander und andererseits der beiden Deckelschalen mit einer Behältniswandung auch desshalb weniger gut geeignet, weil ihre Bedienung unter solchen Verhältnissen zu kompliziert wird und daher insbesondere die Gefahr einer versehentlichen Falschbedienung besteht.

Der Erfindung liegt die Aufgabe zugrunde, eine Verriegelungseinrichtung für doppelschalige Deckelausbildungen zu schaffen, welche zum einen bei nahezu unbegrenzter und wartungsfreier Lebensdauer mit einem geringstmöglichen Aufwand herstellbar und montierbar ist und die zum anderen bedienungsfreundlich ist, in der Weise, daß trotz leichter, d.h. keine Ablenkung der Aufmerksamkeit erfordernde, Bedienbarkeit Fehlbedienungen so weit als überhaupt möglich ausgeschlossen sind.

Diese Aufgabe wird mit einer Deckelverriegelung mit den Merkmalen des Patentanspruchs 1 gelöst.

Die erfindungsgemäße Gestaltung der Verriegelungseinrichtungen für die beiden Deckelschalen einerseits miteinander und anderersteits mit der Behältniswandung bringt den Vorteil der Vermeidung jeweder einzeln herzustellender, relativ zueinander verstellbar zu montierender Einzelteile, wie Riegelglied und dessen Lagerung, mit sich und ermöglicht es darüberhinaus die Griffteile jeweils hinreichend breit und griffgünstig auszubilden. Zugleich wird hierdurch ermöglicht, die Griffteile in einer solchen Weise anzuordnen, daß trotz leichter und bequemer Handhabbarkeit Fehlbedienungen der Verriegelungseinrichtungen zumindest praktisch ausgeschlossen sind. Insbesondere ermöglicht es die erfindungsgemäße Gestaltung den Träger samt Riegelnase und Griffteil einteilig zu gestalten, wozu sich insbesondere die Herstellung des Trägers als Kunststoffformteil als vorteilhaft anbietet. Es ist dem Prinzip nach aber auch möglich den Träger samt Riegelnase und Griffteil aus einem einteiligen Blechmaterialzuschnitt zu bilden, in der Weise, daß das Griffteil durch eine Endeinrollung oder Endabwinkelung und die Riegelnase durch eine quer zur Ebene des Trägers gerichtete Abstellung einer Ausklinkung gebildet wird.

Unabhängig davon, aus welchem Material der die Rigelnase tragende Träger gebildet ist, ist vorgesehen, daß die gegenseitige Verriegelung der beiden Deckelschalen miteinander durch einen an der außenliegenden Deckelschale angeordneten und senkrecht zur Deckelschalenebene federnd elastischen Träger und einer einen parallel zur außenliegenden Deckelschale abgewinkelten Stirnrandbereich der innenliegenden Deckelschale untergreifenden Riegelnase besteht, wobei zweckmäßigerweise weiterhin vorgesehen ist, daß der aus einem federnd elastischen Material bestehende Träger zur Erzielung einer im wesentlichen lediglich senkrecht zu seiner Ebene gerichteten Federelastizität wenigstens eine quer zu seiner Ebene gerichtete Abwinkelung aufweist. Sofern der Träger samt Riegelnase und Griffteil als eigenständiges Bauteil hergestellt und montiert ist, wird er an einer hierzu ausgebildeten Fläche an der Innenseite der außenliegenden Deckelschale befestigt.

Der die der gegenseitigen Verriegelung der beiden Deckelschalen zugeordnete Verriegelungseinrichtung bildende Träger ist zweckmäßigerweise samt Riegelnase und Griffteil als einteiliges Formteil aus einem Kunststoffmaterial gestaltet.

In einer besonders vorteilhaften, weil die Anzahl der erforderlichen Einzelteile und deren Montage verringernden Ausgestaltungsform der Erfindung ist vorgesehen, daß der die der gegenseitigen Verriegelung der beiden Deckelschalen zugeordnete Verriegelungseinrichtung bildende Träger Materialeinheitlich mit der außenliegenden Deckelschale ausgebildet ist, in der Weise, daß der Träger samt Riegelnase und Griffteil zusammen mit der Deckelschale als einteiliges Formteil aus einem Kunststoffmaterial gestaltet ist. Dies empfiehlt sich insbesondere in denjenigen Fällen, in denen vorgesehen ist, daß die beiden Deckelschalen jeweils aus einem Kunststoffformteil, beispielsweise als Spritzgußteil, gebildet sind.

Hinsichtlich der Ausbildung der gemeinsamen Verriegelung der beiden Deckelschalen mit der Behältniswandung ist in weiterer Ausgestaltung der Erfindung vorgesehen, daß diese durch eine an einem quer zu seiner Ebene federnd elastisch ausgebildeten Bereich der vorderen Querwandung der innenliegenden Deckelschale angeordnete Riegelnase und einen an der zugehörigen Behältniswandung ausgebildeten Rastvorsprung sowie eine einen Griffteil bildende Randausbildung der innenliegenden Schale gebildet ist.

Eine einerseits bequem bedienbare und andererseits Fehlbedienungen weitestgehend ausschließende Anordnung der Griffteile der beiden Verriegelungseinrichtungen ergibt sich dadurch, daß bevorzugterweise die Griffteile der beiden Verriegelungseinrichtungen in der Draufsicht gegeneinander versetzt angeordnet sind, in der Weise, daß dem der gegenseitigen Verriegelung der beiden Schalen des Deckels zugeordneten Griffteil eine Aussparung in dem der gemeinsamen Verriegelung der beiden Deckelschalen mit der Behältniswandung zugeordneten Griffteil zugeordnet ist. Für die Anordnung kann dabei entweder eine einseitig gegenseitige seitliche Versetzung der beiden Griffteile, in der Weise, daß der Griffteil der einen neben dem Griffteil der anderen Verriegelungseinrichtung angeordnet ist, oder aber eine mittige Versetzung, in der Weise, daß der Griffteil der einen mehr oder minder mittig zum Griffteil der anderen Verriegelungseinrichtung angeordnet ist, vorgesehen sein.

Zur Vermeidung von Fehlbedienungen, insbesondere zur Vermeidung eines unbeabsichtigten Lösens der gegenseitigen Verriegelung der beiden Deckelschalen bei geöffnetem Deckel, kann erfindungsgemäß weiterhin vorgesehen sein, daß der der gegenseitigen Verriegelung der beiden Deckelschalen dienenden Verriegelungseinrichtung eine bei in Öffnungsstellung befindlichem Gesamtdeckel wirksame Blockiereinrichtung zugeordnet ist.
In einer vorteilhaften Ausbildung einer solchen Blockiereinrichtung ist vorgesehen, daß die der der gegenseitigen Verriegelung der beiden Deckelschalen dienenden Verriegelungseinrichtung zugeordnete Blockiereinrichtung einen als Rotationskörper, Kugel oder Walze, ausgebildeten Blockierkörper und eine als schiefe Ebene ausgebildete Laufbahn für den Blockierkörper sowie einen mit dem Träger starr verbundenen, die Laufbahn des Blockierkörpers übergreifenden Ausleger umfaßt.

Da die Blockiereinrichtung ausschließlich bei geöffnetem Deckel wirksam werden soll ist weiterhin vorgesehen, daß die als schiefe Ebene ausgebildete Laufbahn für den Blockierkörper an der Innenseite der außenliegenden Deckelschale und ausgehend von der freien zur Anlenkseite des Deckels hin ansteigend angeordnet ist.

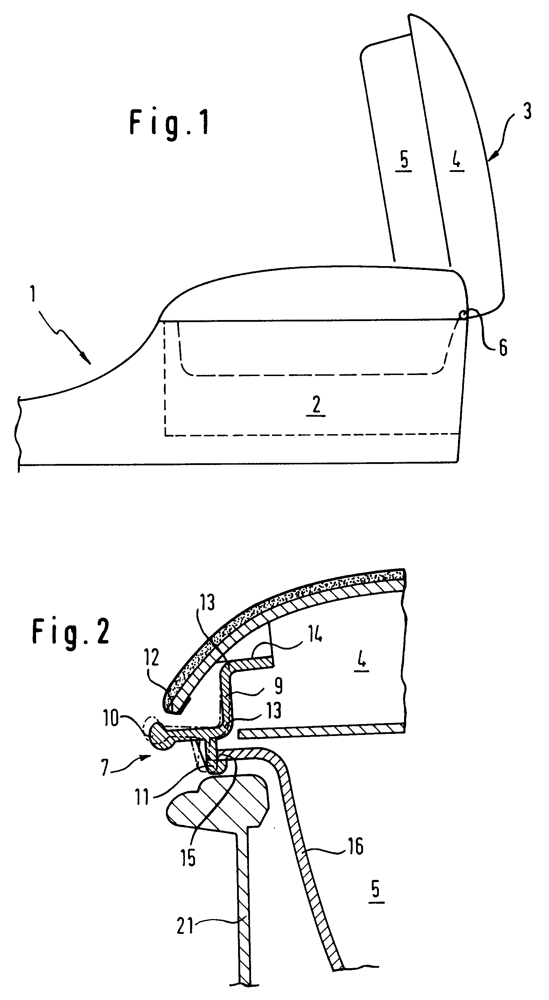

Die Erfindung ist in der nachfolgenden Beschreibung anhand eines in der Zeichnung dargestellten Ausführungsbeispieles im Einzelnen beschrieben.
In der Zeichnung zeigt die
- Figur 1: eine schematische Seitenansicht einer als Behältnis ausgebildeten und mit einem doppelschaligen Deckel verschließbaren Mittelkonsole;
- Figur 2: einen Schnitt durch einen ersten Breitenabschnitt der Vorderkante des Behältnisses in der Mittelkonsole nach Figur 1;
- Figur 3: einen Schnitt durch einen zweiten Breitenabschnitt der Vorderkante des Behältnisses in der Mittelkonsole nach Figur 1;
- Figur 4: einen Schnitt gemäß Figur 2 bei einer anderen Ausgestaltungsform der Erfindung.

In der Mittelkonsole 1 eines Kraftfahrzeuges ist eine ein Behältnis 2 bildende Vertiefung vorgesehen, welche mittels eines ihre offene Oberseite übergreifenden Deckels 3 verschließbar ist. Der Deckel 3 besteht aus zwei Schalen 4 und 5, die miteinander und gegeneinander um eine gemeinsame Achse 6 schwenkbar an einem Querrand der Vertiefung in der Mittelkonsole 1 schwenkbar angelenkt sind. Die beiden gegeneinander schwenkbaren Schalen 4 und 5 des Deckels 3 sind an ihrem ihrer Anlenkung 6 an der Mittelkonsole 1 gegenüberliegenden Ende vermittels je einer Verriegelungseinrichtung 7 bzw. 8 zum einen miteinander und zum anderen gemeinsam gegenüber der Mittelkonsole 1 verriegelbar.

Die Verriegelungseinrichtung 7 zum gegenseitigen Verriegeln der beiden Deckelschalen 4 und 5 besteht im gezeigten Ausführungsbeispiel aus einem Träger 9 aus einem federnd elastischen Material, mit einteilig angeformtem Griffteil 10 und Riegelnase 11, wobei der Träger 9 zwecks zur Deckelvorderkante 12 paralleler Ausrichtung seiner Elastizität mit zwei zueinander und zur Deckelvorderkante 12 parallelen Abwinkelungen 13 versehen und an einer hierzu ausgebildeten Fläche 14 der außenliegenden Deckelschale 4 befestigt ist. Der Riegelnase 11 des Trägers 9 ist ein parallel zur allgemeinen Deckelebene abgestellter Stirnrandbereich 15 der innenliegenden Deckelschale 5 als Raste zugeordnet.

In wenigstens einem außerhalb der Überdeckung durch den Träger 9 bzw. das mit diesem einteilig ausgebildete Griffteil 10 liegenden Bereich ihrer vorderen Stirnwand 16 ist die innenliegende Deckelschale 5 mit einer den voderen Öffnungsrand 18 der Vertiefung in der Mittelkonsole 1 übergreifend ausgebildeten Stirnrandausbildung 17 ausgestattet, wobei diese Stirnrandausbildung 17 zugleich den Griffteil für das Lösen der der gemeinsamen Verriegelung beider Deckelschalen 4 und 5 gegenüber der Mittelkonsole 1 bildet. Zur Herstellung der Verriegelung zwischen Mittelkonsole 1 und innenliegender Deckelschale 5 ist deren vordere Stirnwand 16 zumindest bereichsweise federnd elastisch ausgebildet und mit einer Riegelnase 19 versehen, welcher eine Rastleiste 20 an der vorderen Stirnwand 21 der Mittelkonsole 1 als Raste zugeordnet ist.

Die Griffteile 10 und 17 der beiden Verriegelungen sind in einer gemeinsamen und senkrecht zur offenen Oberseite der Vertiefung in der Mittelkonsole 1 ausgerichteten Ebene angeordnet.

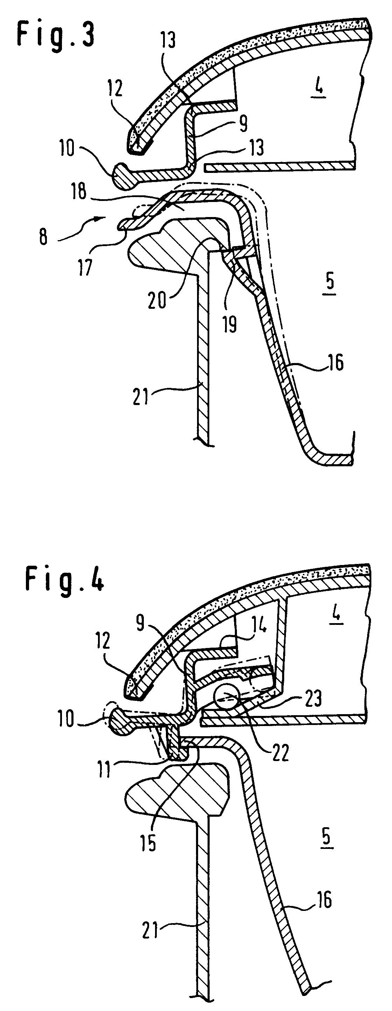

Bei der in der Figur 4 dargestellten Ausführungsform ist der Verriegelungseinrichtung zum gegenseitigen Verriegeln der beiden Deckelschalen 4 und 5 eine Blockiereinrichtung zugeordnet, welche ein unbeabsichtigtes Lösen der Verriegelung bei geöffenetem Deckel 3 verhindert. Die Blockiereinrichtung besteht hierbei aus einem als Walze 22 ausgebildeten Blockierkörper, einer diesem als Laufbahn 23 zugeordneten schiefen Ebene und einem mit dem Träger 9 starr verbundenen, die Laufbahn 23 und den Blockierkörper 22 übergreifenden Ausleger. Die die Laufbahn 23 für den Blockierkörper 22 bildende schiefe Ebene ist ausgehend von der vorderen Deckelstirnseite zu dessen hinterseitiger Anlenkung hin ansteigend ausgerichtet. Diese Ausbildung ist so gestaltet, daß sich der Blockierkörper 22 bei in seiner Schließlage befindlichem Deckel 3 an der tiefsten Stelle der schiefen Ebene und damit in einer wirkungslosen Lage und bei geöffnetem Deckel an einer hochliegenden Stelle der schiefen Ebene und damit in einer Blockierstellung befindet, wobei die Verstellung des Blockierkörpers von der einen seiner Wirkstellungen in die andere jeweils durch Schwerkraft und daher selbsttätig erfolgt.

## Patentansprüche

1. Deckelverriegelung für die Abdeckung von Behältnissen (2) in Kraftfahrzeugen für zweischalige schwenkbare Deckel (3), dessen beide Schalen (4, 5) einen Hohlraum einschließen und an ihrem einen Ende um eine gemeinsame Achse (6) sowohl gegeneinander als auch gemeinsam schwenkbar angelenkt sowie bei in seiner Schließlage befindlichem Deckel (3) an ihrem anderen Ende sowohl miteinander als auch mit der Behältniswandung verriegelbar sind, wobei zwei Verriegelungsvorrichtungen (7, 8) vorgesehen sind, deren eine (7) der gegenseitigen Verriegelung der beiden Schalen (4, 5) des Deckels (3) miteinander und deren andere (8) der Verriegelung des Deckels (3) insgesamt mit dem Behältnis (2) zugeordnet ist, wobei die Verriegelungseinrichtung (7, 8) jeweils aus einem eine starre Riegelnase (11) tragenden, mit einem Griffteil (10) versehenen sowie quer zu seiner Breite federnd elastischen Träger (9) besteht und die Griffteile beider Verriegelungseinrichtungen (7, 8) in einer gemeinsamen Ebene angeordnet sind.

2. Deckelverriegelung nach Anspruch 1,
**dadurch gekennzeichnet, daß**
die gegenseitige Verriegelung der beiden Deckelschalen (4, 5) miteinander durch einen an der außenliegenden Deckelschale (4) angeordneten und senkrecht zur Deckelschalenebene federnd elastischen Träger (9) und einer einen parallel zur außenliegenden Deckelschale (4) abgewinkelten Stirnrandbereich der innenliegenden Deckelschale (5) untergreifenden Riegelnase (11) besteht.

3. Deckelverriegelung nach Anspruch 1,
**dadurch gekennzeichnet, daß**
die gemeinsame Verriegelung der beiden Deckelschalen (4, 5) mit der Behältniswandung durch eine an einem quer zu seiner Ebene federnd elastisch ausgebildeten Bereich der vorderen Querwandung der innenliegenden Deckelschale (5) angeordnete Riegelnase und einen an der zugehörigen Behältniswandung ausgebildeten Rastvorsprung gebildet ist.

4. Deckelverriegelung nach Anspruch 1,
**dadurch gekennzeichnet, daß**
die Griffteile (10, 17) der beiden Verriegelungseinrichtungen in der Draufsicht gegeneinander versetzt angeordnet sind, in der Weise, daß dem der gegenseitigen Verriegelung der beiden Schalen (4, 5) des Deckels zugeordneten Griffteil (17) eine Aussparung in dem der gemeinsamen Verriegelung der beiden Deckelschalen mit der Behältniswandung zugeordneten Griffteil zugeordnet ist.

5. Deckelverriegelung nach Anspruch 1,
**dadurch gekennzeichnet, daß**
die der gegenseitigen Verriegelung der beiden Deckelschalen (4, 5) zugeordnete Verriegelungseinrichtung (7) aus einem wenigstens eine quer zu seiner Ebene gerichtete Abwinkelung aufweisenden Träger aus einem federnd elastischen Material umfaßt und der Träger an der Innenseite der außenliegenden Deckelschale befestigt ist.

6. Deckelverriegelung nach Anspruch 1,
**dadurch gekennzeichnet, daß**
der die der gegenseitigen Verriegelung der beiden Deckelschalen (4, 5) zugeordnete Verriegelungseinrichtung (7) bildende Träger (9) materialeinheitlich mit der außenliegenden Deckelschale (4) ausgebildet ist.

7. Deckelverriegelung nach Anspruch 1,
**dadurch gekennzeichnet, daß**
die beiden Deckelschalen (4, 5) jeweils aus einem Kunststofformteil gebildet sind.

8. Deckelverriegelung nach Anspruch 1,
**dadurch gekennzeichnet, daß**
der die der gegenseitigen Verriegelung der beiden Deckelschalen (4, 5) zugeordnete Verriegelungseinrichtung (7) bildende Träger (9) samt Riegelnase (19) und Griffteil (10) als einteiliges Formteil aus einem Kunststoffmaterial gestaltet ist.

9. Deckelverriegelung nach Anspruch 1,
**dadurch gekennzeichnet, daß**
der der gegenseitigen Verriegelung der beiden Deckelschalen (4, 5) dienenden Verriegelungseinrichtung (7) eine bei in Öffnungsstellung befindlichem Gesamtdeckel wirksame Blockiereinrichtung zugeordnet ist.

10. Deckelverriegelung nach Anspruch 1,
**dadurch gekennzeichnet, daß**
die der der gegenseitigen Verriegelung der beiden Deckelschalen (4, 5) dienenden Verriegelungseinrichtung (7) zugeordnete Blockiereinrichtung einen als Rotationskörper, Kugel oder Walze (22) ausgebildeten Blockierkörper und eine als schiefe Ebene ausgebildete Laufbahn (23) für den Blockierkörper sowie einen mit dem Träger (9) starr verbundenen die Laufbahn des Blockierkörpers übergreifenden Ausleger umfaßt.

11. Deckelverriegelung nach Anspruch 1,
**dadurch gekennzeichnet, daß**
die als schiefe Ebene ausgebildete Laufbahn (23) für den Blockierkörper an der Innenseite der außenliegenden Deckelschale (4) und ausgehend von der freien zur Anlenkseite des Deckels hin ansteigend angeordnet ist.

## Claims

1. Lid locking system for covering containers (2) in motor vehicles, for two-shelled pivotable lids (3), both shells (4, 5) of which enclose a cavity and are hinged at one end about a common axis (6) both relative to one another and also in common and, when the lid (3) is in its closed position, are lockable at their other end both to one another and also to the container wall, two locking devices (7, 8) being provided, one (7) of which is allocated to the mutual locking of the two shells (4, 5) of the lid (3) together, and the other (8) is allocated to locking of the lid (3) in its entirety with the container (2), the locking device (7, 8) consisting respectively of a resilient carrier (9) carrying a rigid locking projection (11), provided with a handle portion (10) and resilient transversely to its width, and the handle portions of both locking devices (7, 8) are disposed in a common plane.

2. Lid locking system according to claim 1,
characterised in that
the mutual locking together of the two lid shells (4, 5) together is provided by a resilient carrier (9) disposed on the externally arranged lid shell (4) and resilient vertically to the plane of the lid shell, and of a locking projection (11) angled parallel to the externally arranged lid shell (4) and engaging underneath the inwardly-lying lid shell (5).

3. Lid locking system according to claim 1,
characterised in that
the common locking of both lid shells (4, 5) to the container wall is formed by an area of the forward transverse wall of the inwardly-lying lid shell (5) which is resilient and elastic transversely to its plane, and by an engagement projection formed on the associated container wall.

4. Lid locking system according to claim 1,
characterised in that
the handle portions (10, 17) of both locking devices, seen in plan view, are offset to one another, in such a way that a recess in the handle portion associated with common locking of both lid shells to the container wall is associated with the mutual locking of both shells (4, 5) of the lid.

5. Lid locking system according to claim 1,
characterised in that
the locking device (7) associated with mutual locking of both lid shells (4, 5) comprises a carrier having at least one angled portion aligned transversely to its plane, made of a resilient elastic material, and the carrier is secured to the inner side of the externally arranged lid shell.

6. Lid locking system according to claim 1,
characterised in that
the carrier (9) forming the locking device (7) associated with mutual locking of both lid shells (4, 5) is formed of a homogeneous material with the externally arranged lid shell (4).

7. Lid locking system according to claim 1,
characterised in that
both lid shells (4, 5) are respectively formed from a moulded plastics part.

8. Lid locking system according to claim 1,
characterised in that
the carrier (9) forming the locking device (7) associated with mutual locking of both lid shells (4, 5), is formed together with the locking projection (19) and the handle portion (10) as a one-piece moulded part of a plastics material.

9. Lid locking system according to claim 1,
characterised in that
a blocking device effective when the entire lid is in the open position is associated with the locking device (7) serving for mutual locking of both lid shells (4, 5).

10. Lid locking system according to claim 1,
characterised in that
the blocking device associated with the locking device (7) serving for mutual locking of both lid shells (4, 5) comprises a blocking member formed as a rotary member, ball or roller (22), and a track (23), formed as a slanting plane for the blocking member, and a projection rigidly connected to the carrier (9) and extending above the track of the blocking member.

11. Lid locking system according to claim 1,
characterised in that
the track (23) formed as slanting plane for the blocking member is disposed on the inner side of the externally arranged lid shell (4), and is inclined upwards from the free towards the hinged side of the lid.

## Revendications

1. Dispositif de verrouillage de couvercles pour la fermeture de récipients (2) dans des véhicules à moteur, pour des couvercles (3) pivotant à double enveloppes dont les deux enveloppes (4, 5) définissent un espace creux et sont articulées de manière à pouvoir pivoter aussi bien l'une par rapport à l'autre qu'ensemble, autour d'un axe (6) commun situé à l'une de leurs extrémités, et peuvent également être verrouillées à leur autre extrémité tant l'une avec l'autre qu'avec la paroi du récipient, lorsque le couvercle (3) se trouve dans sa position de fermeture, dans lequel deux dispositifs de verrouillage (7, 8) sont prévus, dont l'un (7) est associé au verrouillage mutuel des deux enveloppes (4, 5) du couvercle (3) l'une avec l'autre, et dont l'autre (8) est associé au verrouillage de l'ensemble du couvercle (3) avec le récipient (2), dans lequel le dispositif de verrouillage (7, 8) est chaque fois constitué d'un support élastique (9) portant un bec de verrouillage rigide (11), doté d'une partie de préhension (10) et élastique dans le sens transversal à sa largeur, et les parties de préhension des deux dispositifs de verrouillage (7,8) sont disposées dans un plan commun.

2. Dispositif de verrouillage de couvercle selon la revendication 1, caractérisée en ce que le dispositif de verrouillage mutuel des deux enveloppes (4, 5) du couvercle l'une avec l'autre est constitué d'un support élastique (9) disposé sur l'enveloppe extérieure (4) du couvercle, et élastique dans la direction perpendiculaire au plan de l'enveloppe de couvercle, et d'un bec de verrouillage (11) accrochant par le dessous une région de bordure frontale repliée de l'enveloppe intérieure (5) du couvercle orientée parallèlement à l'enveloppe extérieure (4) du couvercle.

3. Dispositif de verrouillage de couvercle selon la revendication 1, caractérisé en ce que le dispositif de verrouillage commun des deux enveloppes (4, 5) du couvercle avec la paroi du récipient est formé par un bec de verrouillage disposé sur une partie de la paroi transversale avant de l'enveloppe intérieure du couvercle, laquelle partie est réalisée élastique dans le sens transversal à son plan, et par une saillie d'accrochage élastique réalisée sur la paroi associée du récipient.

4. Dispositif de verrouillage de couvercle selon la revendication 1, caractérisé en ce que les parties de préhension (10, 17) des deux dispositifs de verrouillage sont disposées en position mutuellement décalées lorsqu'elles sont vues en plan, de telle sorte qu'une découpe dans la partie de préhension associée au verrouillage commun des deux enveloppes du couvercle avec la paroi du récipient, est associée à la partie de préhension (17) associée au verrouillage mutuel des deux enveloppes (4, 5) du couvercle.

5. Dispositif de verrouillage de couvercle selon la revendication 1, caractérisé en ce que le dispositif de verrouillage (7) associé au verrouillage mutuel des deux enveloppes (4, 5) du couvercle est constitué d'un support réalisé en un matériau élastique et présentant au moins un coude orienté transversalement par rapport à son plan, et le support est fixé au côté intérieur de l'enveloppe extérieure du couvercle.

6. Dispositif de verrouillage de couvercle selon la revendication 1, caractérisé en ce que le support (9) formant le dispositif de verrouillage (7) associé au verrouillage commun des deux enveloppes (4, 5) du couvercle est réalisé dans le même matériau que l'enveloppe extérieure (4) du couvercle.

7. Dispositif de verrouillage de couvercle selon la revendication 1, caractérisé en ce que les deux enveloppes (4, 5) du couvercle sont chacune formées d'une pièce moulée en matière synthétique.

8. Dispositif de verrouillage de couvercle selon la revendication 1, caractérisé en ce qu'ensemble avec le bec de verrouillage (19) et la partie de préhension (10), le support (9) formant le dispositif de verrouillage (7) associé au verrouillage mutuel des deux parties de couvercle (4, 5) sont réalisées sous la forme d'une pièce moulée d'un seul tenant, en un matériau synthétique.

9. Dispositif de verrouillage de couvercle selon la revendication 1, caractérisé en ce qu'un dispositif de blocage agissant lorsque l'ensemble du couvercle se trouve en position d'ouverture est associé au dispositif de verrouillage (7) servant au verrouillage mutuel des deux parties du couvercle (4, 5).

10. Dispositif de verrouillage de couvercle selon la revendication 1, caractérisé en ce que le dispositif de blocage associé aux dispositif de verrouillage (7) servant au verrouillage mutuel des deux parties du couvercle (4, 5) comporte un corps de blocage configuré sous la forme d'un corps rotatif, bille ou cylindre (22) et une piste de roulement (23) configurée comme plan oblique pour le corps de blocage, ainsi qu'un bras relié rigidement au support (9) et chevauchant la piste de roulement du corps de blocage.

11. Dispositif de verrouillage de couvercle selon la revendication 1, caractérisé en ce que la piste de roulement (23) configurée comme plan oblique pour le corps de blocage est disposée sur le côté intérieur de l'enveloppe extérieur (4) du couvercle et présente un pente montante en partant du côté libre du couvercle en direction du côté articulé du couvercle.
